# EUROPÄISCHE PATENTSCHRIFT

(11) **EP 3 691 943 B1**
(45) Veröffentlichungstag und Bekanntmachung des Hinweises auf die Patenterteilung: **22.09.2021**
(21) Anmeldenummer: 18785553.1
(22) Anmeldetag: 04.10.2018
(51) Int. Cl.: B60T 13/74, F16D 55/226, F16D 65/18

(54) **MECHANISCHE BREMSVORRICHTUNG**
MECHANICAL BRAKE ACTUATOR
ACTIONNEUR DE FREIN MECHANIQUE

(30) Priorität: 06.10.2017 DE 102017123266
(43) Veröffentlichungstag der Anmeldung: 12.08.2020
(73) Patentinhaber: thyssenkrupp AG, 45143 Essen (DE)
(72) Erfinder: SZIMANDL, Barna, 9473 Gams (CH)
(74) Vertreter: thyssenkrupp Intellectual Property GmbH
(86) Internationale Anmeldenummer: PCT/EP2018/076970
(87) Internationale Veröffentlichungsnummer: WO 2019/068794

(56) Entgegenhaltungen:
- EP-A2- 0 901 960
- DE-A1- 10 145 236
- US-A1- 2014 034 432

## Beschreibung

Die Erfindung betrifft eine Bremsvorrichtung, insbesondere eine Stellvorrichtung für ein mechanisches Bremssystem. Derartige Bremsvorrichtungen werden unter anderem, aber nicht nur bei Nutzfahrzeugen verwendet, die sowohl eine Betriebsbremse aber auch eine Feststellbremse verwenden bzw. benötigen.

Mechanische Bremssysteme, auch als Schleifbremsen oder Friktionsbremsen bezeichnet, beruhen darauf, eine Bewegung durch Reibung zwischen einem festen und dem bewegten Körper zu reduzieren und/oder zu stoppen.

Für die Betätigung von Friktionsbremsen in einem Fahrzeugstrang, insbesondere von Scheibenbremsen mit Bremssattel und Bremsscheibe, wird ein Aktuator benötigt, welcher die rotationsfest mit einem Rahmen verbundenen Bremsbeläge, z.B. im Bremssattel, gegen eine entsprechende Gegenfläche von im Regelfall mitrotierenden Teilen, z.B. der Bremsscheibe, drückt. Hierbei bieten sich neben hydraulischen Aktuatoren auch elektromotorische Lösungen an.

Herausforderungen hierbei stellen die schnelle Überwindung des zwischen Bremsbelag und Gegenfläche befindlichen Fluidspalts (im Folgenden auch als Luftspalt oder Bremsspalt bezeichnet) dar, die Erzeugung ausreichend hoher Anpresskräfte bei/mit Anliegen eines Bremsbelages gegen die Gegenfläche sowie die Nachstellung der Fluidspaltbreite infolge von Abnutzungserscheinungen an Bremsbelag und/oder Gegenfläche.

Eine weitere Anforderung ist eine hohe Ausfallsicherheit, weswegen redundante Systeme bevorzugt werden. Zusätzlich kann es erwünscht sein, neben einer Betriebsbremse auch eine Feststell- bzw. Parkbremse vorliegen zu haben, welche das Fahrzeug auch bei ausgeschalteter Energieversorgung zuverlässig gegen Wegrollen sichert. Weiterhin kann es gewünscht sein, dass sich die Bremse je nach Betriebssituation selbsttätig löst, etwa im Fahrbetrieb, oder blockiert, etwa im Parkmodus.

Zur Erfüllung von Redundanzanforderungen sind verschiedene Bremssysteme bekannt, bei denen die Bewegung des Bremsbelages über zwei unabhängig voneinander arbeitende Elektromotoren erreicht werden kann.

EP 3093529 A2 offenbart beispielsweise ein Zweimotorsystem, bei welchem ein linearer Verstelltrieb an einen Abtrieb eines Planetengetriebes gekoppelt ist und zwei E-Motoren mit zwei Eingängen des Planetengetriebes verbunden sind. Hierbei weist jeder Motor eine unabhängige Stromversorgung auf.

DE 19611911 A1 offenbart ein Zweimotorsystem, bei welchem das Zahnrad eines Stelltriebs mit einem ersten Ritzel eines ersten E-Motors kämmt, und besagtes erstes Ritzel mit einem zweiten Ritzel eines zweiten E-Motors kämmt. Bei entsprechender Auslegung ist es damit möglich, die Bremse bei Ausfall eines Motors durch den zweiten Motor zu betreiben und umgekehrt. Es kann auch der Fall sein, dass beide Motoren so ausgelegt sind, dass sie nur gemeinsam die gewünschte Bremskraft aufbringen. Selbst in diesem Falle kann bei Ausfall eines Motors durch den zweiten Motor aber noch eine wenn auch verringerte Bremskraft bereitgestellt werden.

Aus US 8393440 B2 und US 9127735 B2 sind weiterhin Bremsaktuatoren bekannt, welche für ein wegabhängige Kraft-Weg-Verhältnis des Verstelltriebs Exzenter einsetzen und damit nicht-lineare Kraft-Weg-Übersetzungsverhältnisse realisieren, wobei in einer ersten Phase während der Überwindung des Luftspalts zwischen Bremsbelag und Gegenfläche eine niedrige Übersetzung, d.h. hoher Stellweg bei niedriger Kraft, und in einer zweiten Phase eine hohe Übersetzung, d.h. niedriger Stellweg bei hoher Kraft, gewünscht ist. Der Ausdruck Phase ist nicht zwingend wörtlich zu verstehen, und umfasst auch den Übergang von einem ersten Zustand mit niedrigem Übersetzungsverhältnis zu einem zweiten Zustand mit hohem Übersetzungsverhältnis. Das Verhältnis Kraft-Weg ist gleichbedeutend mit dem Verhältnis Moment-Drehwinkel zu verstehen.

Nachstelleinrichtungen für die Anpassung des Luftspalts z.B. infolge aufgetretenen Verschleißes sind z.B. aus EP 2433025 B1 bekannt. Hier wird ein weiterer, separater Aktuator vorgeschlagen, welcher den Luftspalt wunschgemäß nachregelt.

Aus DE 102014006900 A1 ist weiterhin ein zweistufiges hydraulisches Bremssystem bekannt, das eine erste und eine zweite Druckkammer aufweist, wobei erste und zweite Druckkammer erst nach Zurücklegen eines Verstellweges miteinander kommunizieren, so dass dadurch das Kraft-WegÜbersetzungsverhältnis modifiziert wird.

Aus US 2017045105 A1 ist eine elektrohydraulische Bremseinrichtung bekannt, in welcher ein bremsnaher/bremssystemintegrierter Elektromotor den für die Bremswirkung notwendigen Druckaufbau bewirkt.

EP 1 228 319 B1 beschreibt eine Scheibenbremse, insbesondere für Nutzfahrzeuge, mit einem eine Bremsscheibe abdeckenden Bremssattel, einer in einem Bremssattel angeordneten Spannvorrichtung zum Anspannen der Bremsbeläge. Zusätzlich ist ein Reguliersystem vorhanden, das den Abstand zwischen dem Bremsbelag und dem Bremsscheibe einstellt.

US 2015 114 771 A1 bezieht sich auf eine veränderliche Kraftlaufcharakteristik einer Reibbremse, die dadurch kompensiert wird, dass ein anfänglicher Betätigungswinkel eines Betätigungsteils der Reibbremse in Abhängigkeit von dem aktuellen Verschleißzustand des Bremsbelags eingestellt wird.

Aus der DE 101 45 236 A1 ist eine Vorrichtung zum Antreiben eines Arbeitselementes mittels eines Drehantriebes bekannt geworden, der über eine Abtriebswelle mit dem Arbeitselement verbunden ist, wobei der Drehantrieb ein Gehäuse aufweist, aus dem die Abtriebswelle heraus führt. Dabei ist vorgesehen, dass dem Drehantrieb zumindest ein zweiter Drehantrieb mit einer zweiten Abtriebswelle zugeordnet ist. Zwischen beiden Drehantrieben ist zumindest eine Bremseinrichtung vorgesehen.

Aus der US 2014/0034432 A1 ist ferner ein elektrischer Bremsaktuator bekannt geworden, der so konfiguriert ist, dass er betriebsbereit an einer Fahrzeugbremse angeschlossen werden kann. Der Bremsaktuator umfasst zwei Elektromotoren mit jeweils einer Abtriebswelle, einen Stellglied-Ausgang, welcher an eine Fahrzeugbremse anschließbar ist, sowie ein Differential.

Auch ist in der EP 0 901 960 A2 ein Aktuator beschrieben, der entweder einen rotierenden Ausgang oder einen linearen Ausgang zum Bewegen einer externen Last aufweist. Der Aktuator umfasst mindestens zwei Antriebsmotoren und einen Synchronisierer, der mit den Ausgängen der Antriebsmotoren verbunden ist. Ferner umfasst der Aktuator einen Differentialmechanismus und einen Schnelllösemechanismus. Der Schnelllösemechanismus löst die Unterstützung der externen Aktuatorlast als Reaktion auf eine interne Aktuatorblockierung.

Der Erfindung liegt das Problem zugrunde, bei einem elektromotorisch angetriebenen Bremssystem sowohl eine erhöhte Ausfallsicherheit durch Redundanz als auch eine Verschleißnachstellung bereitzustellen. Die Verschleißnachstellung soll dabei einen durch Verschleiß vergrößerten Bremsspalt wieder auf seine ursprüngliche Größe bzw. Abstand zurückstellen. Bei der Verwendung eines nicht-linearen Stelltriebes, insbesondere für Betriebsbremsfunktion, darf dieser Stelltrieb durch die Verschließnachstellung zwar verschoben, aber nicht angesteuert, insbesondere gedreht werden.

Gelöst wird die Aufgabe gemäß dem Erfindungsgegenstand nach Anspruch 1. Insbesondere wird eine mechanische Bremsvorrichtung bereitgestellt, die mit einem Bremsteil verbindbar ist, welches mit einem Gegenbremsteil in Eingriff bringbar ist. Die erfindungsgemäße Bremsvorrichtung weist einen ersten Stelltrieb mit einer ersten Antriebsseite und einer ersten Abtriebsseite auf, wobei die erste Abtriebsseite gegenüber der ersten Antriebsseite zumindest in einem Teilbereich der möglichen Bewegung nicht selbsthemmend ausbildet ist, sowie einen zweiten Stelltrieb mit einer zweiten Antriebsseite und einer zweiten Abtriebsseite, wobei die zweite Abtriebsseite gegenüber der zweiten Antriebsseite zumindest in einem Teilbereich der möglichen Bewegung selbsthemmend ausgebildet ist.

Unter Stelltrieb soll hier jenes Teilsystem verstanden werden, das zum mittel- oder unmittelbaren Halten und/oder Bewegen des Bremsteils eingerichtet ist; hierbei wird der Stellantrieb (auch (Stell-)Aktuator) nicht zum Stelltrieb hinzugerechnet. Der Stelltrieb wandelt z.B. eine rotatorische Bewegung, insbesondere des Stellantriebs, in eine translatorische Bewegung um.

Unter Bremsteil und Gegenbremsteil zu verstehen sind insbesondere zwei Friktionspartner einer Friktionsbremse, insbesondere einer Scheibenbremse, von denen der eine stillsteht (Bremsteil) und der zweite sich relativ zum ersten bewegt bzw. bewegen kann (Gegenbremsteil). Das Bremsteil kann dabei bis zur Berührung des Gegenbremsteils zugestellt werden, um eine die Relativbewegung zwischen Brems- und Gegenbremsteil hemmende Bremskraft zu erzeugen und auch wieder wegbewegt werden, um den Kontakt und die damit verbundene Bremswirkung zu lösen.

Selbsthemmend bedeutet in diesem Zusammenhang, dass ein Stelltrieb nur bei Vorliegen einer hinlänglich großen Differenzkraft bzw. eines Differenzmomentes verstellt werden kann, wobei die Differenzkraft bzw. das Differenzmoment lotrecht zur eigentlichen Bewegungsrichtung des Stelltriebs wirkt, insbesondere zur translatorischen Bewegung mindestens eines Teils des Stelltriebs. Kräfte oder Momente, welche entlang der Bewegungsrichtung des Stelltriebs wirken, vermögen keine Verstellung des Stelltriebs zu bewirken. *Maßgeblich für das Verständnis der Wirkungsrichtungen in diesem Absatz sind die Kraftangaben. Der Momentenbegriff ist im Sinne dieser Kraftangaben zu verstehen. Der Begriff "lotrechtes Moment" ist z.B. so zu verstehen, dass das Moment äquivalent durch lotrecht zur Bewegungsrichtung des Stelltriebs wirkenden Kraftvektoren ersetzt werden kann.* Die Selbsthemmung tritt z.B. durch eine erhöhte Reibung zwischen den Teilen des Stelltriebs auf. Alternativ oder zusätzlich tritt sie z.B. durch die Gleitreibung zwischen Schnecke und Schneckenrad auf, wobei eine hohe Übersetzung, eine geringe Gangzahl und/oder ein kleiner Steigungswinkel 0 der Wicklung bei der Schnecke (z.B. 0 < 5° oder 10°) vorliegt.

Die erste Abtriebsseite ist sowohl über die erste Antriebsseite als auch über die zweite Antriebsseite bewegbar, ohne dass hierbei eine Relativbewegung zwischen zweiter Antriebsseite und zweiter Abtriebsseite erfolgt.

Bevorzugt wird dies dadurch realisiert, dass der Reibungswiderstand zwischen erster Antriebsseite und erster Abtriebsseite größer ist als zwischen zweiter Antriebsseite und zweiter Abtriebsseite. Z.B. ist der Reibungswiderstand im ersten Stelltrieb um 20% kleiner gewählt als im zweiten Stelltrieb, besonders bevorzugt jedoch um 40% kleiner.

Anders formuliert: Es besteht die Möglichkeit, dass keine Relativbewegung zwischen zweiter Antriebsseite und zweiter Abtriebsseite bei der translatorischen Bewegung der ersten Abtriebsseite erfolgt, wenn der zweite Stelltrieb in Selbsthemmung steht und der ersten Antriebsseite (des ersten Stelltriebs) - z.B. über den ersten Stellantrieb - und/oder der zweiten Antriebsseite (des zweiten Stelltriebs) - z.B. über den zweiten Stellantrieb - angesteuert wird/werden. Hierbei ist/sind eine oder beide Antriebsseiten derart ansteuerbar, dass die hinlänglich große Differenzkraft (bzw. Differenzmoment) nicht überwunden bzw. die Differenzkraft unterhalb eines vorbestimmten Werts bleibt und der zweite Stelltrieb in Selbsthemmung verbleibt bzw. die Teile des zweiten Stelltriebs - unter anderem die zweite Antriebsseite und die zweite Abtriebsseite - mit der gleichen Winkelgeschwindigkeit rotieren.

Hierbei sind im Wesentlichen drei Fälle möglichen, bei der die Selbsthemmung nicht überwunden wird und die Teile des zweiten Stelltriebs die gleiche Winkelgeschwindigkeit aufweisen; diese Teile sind beispielsweise eine Welle und eine mit der Welle in Eingriff stehende Wellenmutter - beide mit Windungen:
Erstens, der erste Stelltrieb wird mittels des ersten Stellantriebs angesteuert bzw. gedreht und der zweite Stelltrieb ist im Leerlauf. Der zweite Stelltrieb wird aufgrund seiner Selbsthemmung und der Drehung des ersten Stelltriebs ebenfalls gedreht. Hierbei ist es von Vorteil, wenn die (Haft)Reibung und/oder die Trägheit des zweiten Stelltriebs bzw. dessen Teile - An- und Abtriebsseite - als auch dessen Stellantriebs gering ist. Ansonsten würde der zweite Stelltrieb seine Selbsthemmung verlieren und sich nicht vollständig mitdrehen, insbesondere dessen Antriebsseite.

Zweitens, der erste Stelltrieb ist im Leerlauf und der zweite Stelltrieb wird mittels des zweiten Stellantriebs angesteuert bzw. gedreht. Aufgrund der Selbsthemmung des zweiten Stelltriebs wird dessen Drehung auf den ersten Stelltrieb übertragen, so dass sich dieser ebenfalls dreht. Hierbei ist es von Vorteil, wenn die (Haft)Reibung und/oder die Trägheit des ersten Stelltriebs, insbesondere dessen Antriebsseite, als auch dessen Stellantriebs gering ist. Ansonsten würde der zweite Stelltrieb seine Selbsthemmung überwinden und die Antriebsseite des ersten Stelltriebs nicht mitdrehen.

Drittens, sowohl der erste Stelltrieb als auch der zweite Stelltrieb werden jeweils mittels des ersten und zweiten Stellantriebs angesteuert bzw. gedreht. Dabei werden die erste Antriebsseite des ersten Stelltriebs und die zweite Antriebsseite des zweiten Stelltriebs derart gedreht bzw. angesteuert, dass sie sich gleichsinnig und mit der gleichen Winkelgeschwindigkeit drehen. Dadurch wird z.B. die Wellenmutter durch die Windungen nicht translatorisch bzw. entlang der Welle bewegt.

Die Erfindung hat den Vorteil, dass eine Bremsfunktion über die Antriebsseiten beider Stelltriebe unabhängig voneinander ausgeführt werden kann, so dass auch bei Ausfall eines Aktuators ein anderer Aktuator dessen Funktion zumindest bedingt übernehmen kann.

Ein weiterer Vorteil liegt darin, dass bei kombiniertem Betrieb der wenigstens zwei Stellmotoren jeder der Motoren eine geringere Maximal-Leistung bereitstellen muss, wodurch insbesondere die Motorgröße reduziert werden kann.

Ein weiterer Vorteil liegt in der einfachen und robusten Struktur der Bremsvorrichtung, insbesondere bei Verwendung von Gleichteilen, etwa baugleichen Motoren, die die Material- und Herstellungskosten reduziert.Vorzugsweise ist der erste Stelltrieb nicht-linear ausgeführt. Dies bedeutet, dass über den gesamten Bewegungsbereich des Stelltriebes ein konstantes Verhältnis von Antriebsbewegung und Abtriebsbewegung nicht vorliegen darf. Dem Erfindungsgedanken nicht entgegen steht, wenn das Verhältnis von Antriebs- zu Abtriebsbewegung zumindest abschnittsweise linear ausgebildet ist. Die besagte Nicht-Linearität könnte z.B. in einem ersten Bereich einen progressiven Verlauf aufweisen, dann in einen zweiten Bereich mit annähernd konstanter Steigung übergehen, an den sich ein dritter Bereich stetig anschließt, welcher einen im Wesentlichen parabelförmigen Verlauf aufweist. Dadurch können schnellere Bremsbewegungen des Bremsbelags auf eine Bremsgegenfläche durchgeführt werden, um die Zeit zwischen Fahrerreaktion und Bremsung zu verkürzen. Als nicht-lineare Stelltriebe kommen z.B. Gewindetriebe, Kurventrommeln oder Rampen- bzw. Schrägscheibenlager in Frage.

Des Weiteren können der wenigstens eine erste Stelltrieb und der wenigstens eine zweite Stelltrieb koaxial zueinander angeordnet sein, wodurch insbesondere die Möglichkeit entsteht, die erste Antriebsseite des ersten Stelltriebes und die zweite Abtriebsseite des zweiten Stelltriebes vorteilhaft, insbesondere einstückig, miteinander zu verbinden.

Vorteilhafterweise ist die Bremsvorrichtung mit wenigstens einem ersten elektrischen Stellmotor mit einem ersten nicht-selbsthemmenden Getriebe, zum Antreiben des wenigstens einen ersten Stelltriebs, und wenigstens einem zweiten elektrischen Stellmotor mit einem zweiten nicht-selbsthemmenden Getriebe, zum Antreiben des wenigstens einen zweiten Stelltriebs, ausgestattet. Dadurch kann eine Bewegung eines Stelltriebes nahezu widerstandslos an den Motor weitergegeben werden.

Mit dem Ziel einer geringen Anzahl an beweglichen Elementen und einer ruhigen Rotation der Bremsvorrichtung kann/können der wenigstens eine erste Stelltrieb einen Teil des ersten Getriebes und/oder der wenigstens eine zweite Stelltrieb einen Teil des zweiten Getriebes, insbesondere in Form jeweils eines Stirnradgetriebes, bilden.

Vorzugsweise arbeiten der erste und der zweite elektrische Stellmotor vermittels des ersten und zweiten Stelltriebs gemeinsam an der Verstellung des Bremsteils.

Weiterhin können die wenigstens zwei Stelltriebe mittel- oder unmittelbar miteinander synchronisiert sein. Dies bedeutet, dass im Falle der Synchronisation beide Antriebsseiten zu einem Gleichlauf gezwungen werden.
Dies kann beispielsweise durch eine entsprechende Regelung der Antriebsaktuatoren erfolgen, wenn diese ausreichende Sensordaten, wie etwa eine Winkelposition, zur Verfügung stellen. Die Synchronisation kann aber auch durch geeignete (lösbare) Kupplungselemente erfolgen, etwa einer Rastkupplung, die z.B. direkt zwischen erster Antriebsseite und zweiter Abtriebsseite oder zwischen den erstem und zweitem Antriebsaktuator oder zwischen zwischen Stelltrieb und entsprechenden Antrieb zwischengeschalteten Übertragungsgliedern, wie etwa Stirnrädern, angeordnet sind.
Die Synchronisationseinrichtung ist derart ausgebildet, dass sie eine gegensinnige Bewegung von erstem zu zweitem Stelltrieb unter bestimmten Bedingungen zulässt.

Somit ist eine mögliche Verstellung des zweiten Stelltriebes noch immer gegeben. Für den Fall, dass die zweite Antriebsseite bewegt wird während die erste Antriebsseite festgehalten wird, findet eine Verstellung des zweiten Stelltriebes statt, ohne dass dabei eine Relativbewegung zwischen erster Antriebs- und erster Abtriebsseite auftritt. Daraus resultiert, je nach Bewegungsrichtung, eine Bewegung des Bremsteils in Richtung Gegenbremsteil oder von diesem weg. Handelt es sich bei dem ersten Stelltrieb um einen nichtlinearen Stelltrieb, so tritt bei diesem gerade keine Verstellung des Nullpunkts auf. Unter Nullpunkt ist hierbei diejenige Position des nicht-linearen Stelltriebs zu verstehen, bei der der Stelltrieb wunschgemäß arbeitet. Ein Verschieben aus der Nulllage heraus führtanders als bei linearen Stelltrieben, bei denen keine Veränderung der Funktionsweise eintritt - zu einem gänzlich anderen Verhalten des Stelltriebes. Daher muss der Nullpunkt entweder aufrechterhalten oder bei Verschiebung nachgestellt werden.

Damit kann zugleich eine Verschleißnachstellfunktion zur Verfügung gestellt werden.

Für eine flexible Anordnung ist der erste Stelltrieb
- mittelbar bzw. indirekt, insbesondere über den zweiten Stelltrieb, oder
- unmittelbar bzw. direkt
mit dem Bremsteil verbindbar. Aufgrund dessen sind je nach Betriebsbedingungen unterschiedliche Anordnungen möglich, die weiterhin die gleichen Vorteile des Erfindungsgegenstands zur Verfügung stellen. Mitunter ist es im Sinne der Erfindung also gleich, ob die Reihenfolge Stellantrieb 2, Stellantrieb 1, Bremsteil oder aber Stellantrieb 1, Stellantrieb 2, Bremsteil lautet.

In anderen vorteilhaften Ausführungsformen ist/sind der wenigstens eine erste und/oder zweite Stellantrieb als Spindelantrieb, als elektrohydraulischer und/oder als elektropneumatischer Antrieb, insbesondere in Form eines Linearaktuators, ausgebildet. Je nach Einsatzgebiet kann die Verwendung anders ausgebildeter Stellantriebe von Vorteil sein. Wenn ein Bordsystem zum Beispiel hauptsächlich mit Luft- und/oder Wasserdruck arbeitet, können entsprechende Stellantriebe kostengünstiger eingesetzt werden.

Vorteilhafterweise kann ein weiterer Aktuator zum Sperren des wenigstens einen ersten und/oder zweiten Stelltriebs als Parkbremseinrichtung, insbesondere in Form einer schaltbaren Sperrklinke, vorgesehen sein. Dieser Aktuator hat den Vorteil, dass er selbst im ausgeschalteten Zustand seine Sperrfunktion zuverlässig ausübt.

Alternativ und besonders bevorzugt ist der erste Stelltrieb jedoch derart ausgeführt, dass er am Ende eines gewünschten Stellweges einen Rastpunkt mit einem niedrigeren Potentiallevel aufweist, so dass die Bremseinrichtung trotz nicht-sperrender Getriebeanordnung in diesem Punkt nicht selbstlösend ist und zuverlässig blockiert und nur durch aktive Krafteinwirkung eines der Aktuatoren gelöst werden kann. Dadurch kann besonders kostengünstig eine Parkbremsfunktion ohne zusätzliche Bauteile, insbesondere ohne einen zusätzlichen Aktuator, realisiert werden. Damit ist der erste Stelltrieb in einem Bereich nicht-selbsthemmend und einem weiteren Bereich selbsthemmend. Gemäß einem bevorzugten Ausführungsbeispiel sind der wenigstens eine erste Stelltrieb und der wenigstens eine zweite Stelltrieb jeweils als Gewindespindel mit Gewindestange und Gewindeläufer ausgebildet, wobei die Gewindestange des wenigstens einen ersten Stelltriebs und der Gewindeläufer des wenigstens einen zweiten Stelltriebs verdrehsicher miteinander verbunden sind, was eine aktive Vor- und Rückstellung der Bremsteil durch jeden der Stellmotoren ermöglicht.

Gemäß einem anderen bevorzugten Ausführungsbeispiel sind der erste Stelltrieb als Rampenlager und der zweite Stelltrieb als Gewindetrieb ausgeführt. Da dies keine aktiv Vor- und Rückstellung der Bremseinrichtung durch jeden der Stellmotoren ermöglicht, ist kann zusätzlich eine passive Rückführeinrichtung, z.B. in Form eines Federelements, vorgesehen sein.

Weitere vorteilhafte Ausgestaltungen werden nachfolgend beschrieben:
Die wenigstens zwei Stelltriebe sind seriell miteinander gekoppelt, wobei jedes der wenigstens zwei Stelltriebe durch einen eigenen Elektromotor antreibbar ist. Erreicht wird durch diese Ausführungsformen ein Bremssystem, welches im Normalbetrieb ein wunschgemäßes Ansprechverhalten durch schnelle Anstellung ("Phase 1") und hohe Anpresskraft ("Phase 2") infolge des nicht-linearen Stelltriebes zeigt. Durch die Nicht-Linearität kann außerdem der Motor entsprechend kleiner dimensioniert werden. Weiterhin arbeitet das Bremssystem auch bei Ausfall eines Motors mit wenigstens reduzierter Bremsleistung. Schließlich weist das dargestellte Bremssystem auch bei Ausfall aller Motoren ein selbstlösendes Verhalten infolge des nicht-selbsthemmenden Stelltriebs in Kombination mit den nicht-selbsthemmenden bzw. nicht-selbstsperrenden Getrieben auf.

Die Erfindung wird nachfolgend anhand von bevorzugten Ausführungsbeispielen unter Bezugnahme auf die beigefügten schematischen Zeichnungen näher erläutert. Es wird darauf hingewiesen, dass trotz der unterschiedlichen Strukturen und Ausgestaltungen der nachfolgend beschriebenen Ausführungsbeispiele dieselben Bezugszeichen für gleich bezeichnete Komponenten und Bauteile der erfindungsgemäßen Bremsvorrichtung verwendet werden.
Figur 1 zeigt ein Fahrzeug mit Bremspedal, welches über eine Steuereinheit mit den Bremseinrichtungen verbunden ist.
Figur 2 zeigt ein allgemeines Bremssystem mit Bremsteil und Gegenbremsteil und zwei seriell gekoppelten Stelltrieben.
Figur 3 zeigt ein schematisches Model des Bremssystems mit zwei schrägen Flächenpaaren, von denen die eine selbsthemmend und die andere nicht-selbsthemmend ist.
Figur 4 zeigt eine Stelleinrichtung mit Spindeltrieb eines bevorzugten Ausführungsbeispiels der vorliegenden Erfindung.
Figur 5 zeigt eine erfindungsgemäße Stelleinrichtung eines weiteren bevorzugten Ausführungsbeispiels.
Figur 6, 7 zeigen weitere Darstellungen des Ausführungsbeispiels aus Figur 4 mit teilweise ausgeblendeten Teilen.
Figur 8 zeigt eine Schnittdarstellung des Ausführungsbeispiels aus Figur 4.
Figur 9 zeigt einen Schnitt entlang der Linie A-A aus Figur 8.
Figur 10 zeigt eine Schnittdarstellung eines weiteren bevorzugten Ausführungsbeispiels.
Figur 11 zeigt ein beispielhaftes Schrägrampenlager für eine erfindungsgemäße Ausführungsform.
Figur 12 zeigt einen idealisierten Steigungsverlauf einer erfindungsgemäßen Ausführung eines nicht-linearen Stelltriebes.

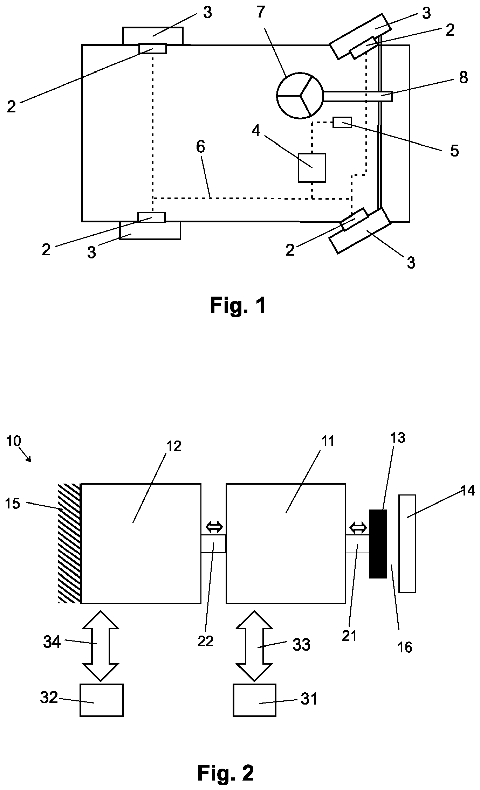

Figur 1 zeigt ein Fahrzeug 1 mit Bremspedal 5, welches über eine Steuereinheit 4 mit vier Bremseinrichtungen 2 verbunden ist. Zur Steuerung der Bremseinrichtungen 2 sendet die Steuerung 4 bei Betätigung des Bremspedals 5 ein elektrisches Signal über eine Signalleitung 6 an die Bremseinrichtung 2. Hierzu ist die Steuerung 4 über die Signalleitung 6 mit den Bremseinrichtungen 2 verbunden. Bei dem Fahrzeug 1 ist zusätzlich ein Lenkrad 7 ausgebildet, das über eine Zahnstangenlenkung 8 die beiden vorderseitig angeordneten Fahrzeugräder 3 lenkt.

Jedes Fahrzeugrad 3 ist mit einer eigenen Bremseinrichtung 2 ausgestattet, wobei sich die Steuerung und die Betätigung der Bremseinrichtungen 2 je nach Ausführungsform unterscheiden kann. So können die Bremseinrichtungen 2 durch die Steuereinheit 4 gemeinsam und/oder einzeln angesteuert werden. Ebenso können die Bremseinrichtungen 2 gleichzeitig und/oder nacheinander angesteuert werden. Die Bremseinrichtungen 2 können über eine eigene Stromversorgung verfügen, so dass das elektrische Signal der Steuereinheit 4 als Aktivierungssignal dient und die eigene Stromversorgung der Bremseinrichtungen 2 die entsprechenden elektrischen Aktuatoren bzw. Motoren (nicht dargestellt) versorgt. In diesem Fall kann das Aktivierungssignal auch kabellos von der Steuereinheit 4 an die Bremseinrichtungen 2 übertragen werden.

Figur 2 zeigt einen Teil eines allgemeinen Bremssystems bzw. einer Bremseinrichtung, die bereits in Fig. 1 dargestellt wurde. Bei dem genannten Teil der Bremseinrichtung handelt es sich insbesondere um eine Stellvorrichtung 10 mit Aktuatoren, wobei die Stellvorrichtung 10 vorzugsweise als Bremskolben für einen Bremssattel in einer Scheibenbremse ausgebildet ist. Die Stellvorrichtung 10 weist zwei seriell gekoppelte Stelltriebe 11 und 12 und einen Bremsbelag 13 auf. Die Stellvorrichtung 10 ist zumindest teilweise in einem Gehäuse 15 angeordnet und zumindest über den Stelltrieb 12 mit diesem Gehäuse 15 befestigt. Die Verbindungselemente 21 und 22 sind zwischen dem Bremsteil 13 und dem ersten Stelltrieb 11 sowie zwischen dem ersten Stelltrieb 11 und dem zweiten Stelltrieb 12 ausgebildet. Beide Stelltriebe 11, 12 weisen jeweils einen Aktuator 31, 32 auf, welche über Kraftübertragungsvorrichtungen 33, 34 auf die Stelltriebe 11, 12 wirken. Schlussendlich ist das Bremsteil 13 bei der Betätigung des ersten Stellantriebs 11 und/oder des zweiten Stellantriebs 12 auf oder von einem Gegenbremsteil 14 verfahrbar. Dadurch wird der Abstand 16 zwischen Bremsteil 13 und Gegenbremsteil 14 verkleinert oder vergrößert. Handelt es sich bei der Bremseinrichtung um eine Scheibenbremse, ist das Gegenbremsteil 14 als Bremsscheibe ausgebildet. Alternative Ausgestaltungen des Gegenbremsteils 14 sind möglich, wobei das Gegenbremsteil 14 komplanar zum Bremsteil 13 rotieren kann und die zu bremsende oder festzuhaltende Komponente darstellt.

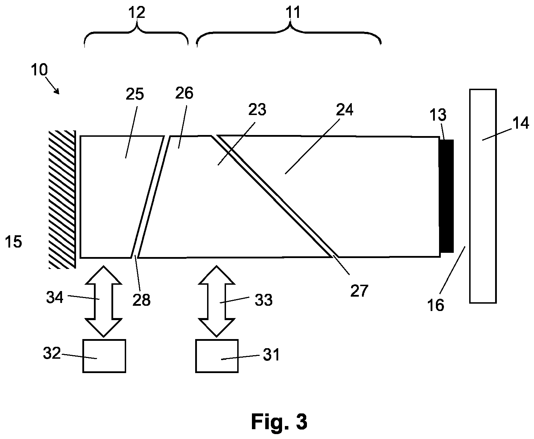

Figur 3 zeigt ein schematisches Model des Bremssystems, insbesondere einer Stellvorrichtung 10, welche zwei schräge Flächenpaaren 27 und 28 aufweist, von denen die eine nicht-selbsthemmend und die andere selbsthemmend ist. Im Vergleich zu der in Figur 2 gezeigten Stellvorrichtung 10 ist die Darstellung der Stellvorrichtung 10 in Figur 3 hinsichtlich dessen Funktionsweise und Komponentenausstattung detaillierter. So sind der erste Stellantrieb 11, der zweite Stellantrieb 12, das Bremsteil 13, das Gegenbremsteil 14, der ausgebildete Bremsspalt 16 sowie das Gehäuse 15 aus Figur 2 bereits bekannt und diesbezüglich beschrieben worden. Der erste Stelltrieb 11 und der zweite Stelltrieb 12 sind seriell bzw. nebeneinander angeordnet und miteinander verbunden. Hierbei ist die Anordnung und/oder Ausbildung der Stelltriebe 11, 12 dergestalt, dass die Betätigungskräfte, die durch die beiden Stelltriebe 11 und 12 ausgeübt werden können, in die gleiche Richtung oder, allgemeiner formuliert, auf einer gemeinsamen Richtungslinie wirken.

Der erste Stelltrieb 11 und der zweite Stelltrieb 12 weisen jeweils einen Antrieb 23, 25 sowie einen Abtrieb 24, 26 auf. Am Antrieb 23, 25 wird eine Kraft, z.B. von einem Aktuator bzw. Motor, eingespeist und der Abtrieb überträgt eine Kraft, die auf der eingespeisten basiert, an ein Werkzeug oder einen Arbeitsvorgang. In dem dargestellten Fall ist die Stellvorrichtung 10 mit einem ersten Aktuator 31 und einem zweiten Aktuator 32 verbunden; insbesondere sind der erste Aktuator 31 über eine erste Kraftübertragungseinrichtung 33 mit dem ersten Stelltrieb 11 und der zweite Aktuator 32 über eine zweite Kraftübertragungseinrichtung 34 mit dem zweiten Stelltrieb 12 verbunden.

Aufgrund der selbsthemmenden Ausbildung 28 des zweiten Stelltriebs 12 ist eine Verstellung zwischen zweiter Antriebsseite 25 und zweiter Abtriebsseite 26 nur bei Vorliegen einer Differenzkraft bzw. eines Differenzmomentes zwischen den Antrieben 31, 32 möglich. Eine parallel zur Zustellbewegung des Bremsteils wirkende Kraftkomponente vermag keine Verstellung, d.h. keine Relativbewegung zwischen An- und Abtriebsseite 25, 26 im zweiten Stelltrieb 12 auszulösen.

Die nicht-selbsthemmende Ausbildung 27 des ersten Stelltriebs 11 ermöglicht stets eine gegenseitige Einwirkung bzw. Kraftübertragung des Antriebs 23 auf den Abtrieb 24 und umgekehrt, ohne Blockierung oder Hemmung des Stelltriebs 11; so wird bei einem Kräfteungleichgewicht die größere Kraft an die andere Seite übertragen, vorausgesetzt die antriebsseitig oder abtriebsseitig angeordneten Aktuatoren oder Lasten lassen eine Kraftrückübertragung zu. Der gegenüber der Ausbildung 28 spitzer ausgebildete Winkel der nicht-selbsthemmenden Ausbildung 27 soll dies verdeutlichen.

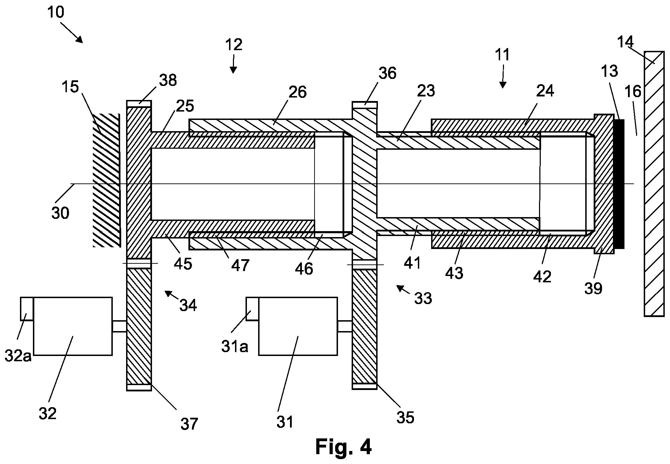

Figur 3 zeigt eine Stelleinrichtung 10 mit Spindeltrieb als ein erstes bevorzugtes Ausführungsbeispiel. Im Vergleich zu den Figuren 2 und 3 werden weitere Details der Stelleinrichtung 10 in Figur 4 gezeigt und nachfolgend genauer erläutert.

Die Stelleinrichtung 10 weist einen ersten Stelltrieb 11 und einen zweiten Stelltrieb 12 auf, die an einem Ende miteinander verbunden sind. Am anderen Ende des ersten Stelltriebs 11 ist ein Bremsteil 13 befestigt, der durch Betätigung einer der Stelltriebe 11, 12 einen Bremsspalt 16 überwinden und gegen eine Gegenbremsteil 14 gedrückt werden kann. Die Stelleinrichtung 10, insbesondere der zweite Stelltrieb 12, ist an einer Wand eines Gehäuses 15 und um eine Achse 30 drehbar befestigt. Im Wesentlichen ist die Stelleinrichtung 10, ohne die Aktuatoren 31 und 32, achsensymmetrisch zur Drehachse 30 ausgebildet.

Der erste Stelltrieb 11 weist ein Zahnrad 36 sowie auf einer Seite des Zahnrads 36 einen Antrieb 23 in Form einer hohlzylinderförmigen Gewindestange mit Außengewinde 41 auf. Dieser Antrieb 23 ist in Wirkeingriff in einem Abtrieb 24 in Form eines Hohlzylinders mit Innengewinde 42. Der Wirkeingriff erfolgt in einem Überschneidungsbereich 43. Des Weiteren ist auf der gegenüberliegenden Seite des Zahnrads 36 ein mit dem Stelltrieb 11, insbesondere mit dem Zahnrad 36, befestigter Hohlzylinder mit einem Innengewinde 46 ausgebildet. Dieser Hohlzylinder bildet den Abtrieb 26 des zweiten Stelltriebs 12 und ist gegenüber der Umgebung durch geeignete Mittel verdrehsicher gelagert (nicht abgebildet).

Der zweite Stelltrieb 12 weist ein Zahnrad 38 sowie auf einer Seite des Zahnrads 38 einen Antrieb 25 mit einer ähnlichen oder identischen Form zu dem des Antriebs 23 des ersten Stelltriebs 11. Dieser Antrieb 25 mit einem Außengewinde 45 ist in Wirkeingriff in dem Abtrieb 26 in Form eines Hohlzylinders mit Innengewinde 46. Der Wirkeingriff erfolgt in einem Überschneidungsbereich 47. Wie bereits beschrieben, ist der Abtrieb 26 des zweiten Stelltriebs 12 verdrehsicher mit dem Antrieb 23 des ersten Stelltriebs 11 verbunden bzw. befestigt.

Grundsätzlich haben die beiden Stelltriebe 11 und 12 die Aufgabe und Funktion, eine Relativrotation zwischen des eigenen Antriebs 23, 25 und Abtriebs 24, 26 in eine translatorische Bewegung des Antriebs und des Abtriebs aufeinander zu oder voneinander weg umzuwandeln. Aufgrund der Selbsthemmung des zweiten Stelltriebs 12 sowie der Tatsache, dass der Trieb 23 des ersten Stelltriebs 11 in Wirkeingriff mit dem Abtrieb 26 des zweiten Stelltriebs 12 steht, entstehen neue Funktionen und Wirkungsweisen und bilden Vorteile, die im Detail unten beschrieben werden.

Die Aktuatoren 31 und 32, vorzugsweise als Elektromotoren ausgebildet, sind jeweils über ein Stirnradgetriebe 33 und 34 mit den entsprechenden Antrieben 23 und 25 verbunden. Das Getriebe 33 des ersten Stelltriebs 11 wird durch ein erstes Zahnrad 35, das am ersten Aktuator 31, insbesondere auf dessen Drehachse, verdrehsicher befestigt ist, und durch ein zweites Zahnrad 36 gebildet, das Teil des ersten Stelltriebs 11 ist. Das Getriebe 34 des zweiten Stelltriebs 12 wird durch ein erstes Zahnrad 37, das am zweiten Aktuator 32, insbesondere auf dessen Drehachse, verdrehsicher befestigt ist, und durch ein zweites Zahnrad 38 gebildet, das Teil des zweiten Stelltriebs 12 ist. Die beiden Getriebe 33 und 34 sind nicht selbst-hemmend und können sich daher bei Anliegen eines Kräfteungleichgewichts in beide Richtungen drehen. sich in beide Richtungen. Dies bedeutet, dass die Bremse sich bei Passivschaltung aller Aktuatoren, und nur für diesen Fall, selbstlösend verhält, z.B. indem Stelltrieb 11 durch Reaktionskräfte z.B. eines durch Bremskräfte federnd gespannten Bremssattels und/oder Taumelschlag einer Bremsscheibe zurückgestellt wird. Weiterhin sind die zwei Spindeltriebe 11, 12 derart ausgeführt, dass die zwischen Antrieb 23 und Abtrieb 24 wirkende Reibung kleiner ist, als die zwischen Antrieb 25 und Abtrieb 26. Dies hat zur Folge, dass eine Rotation von Antrieb 25 keine Relativbewegung im Stelltrieb 12 hervorruft, sondern eine Verstellung in Stelltrieb 11.

Für den Fall, dass der erste Aktuator 31 in einer Bremssituation versagt, kann der zweite Aktuator 32 betätigt werden, der über das zweite Getriebe 34 und den zweiten Stelltrieb 12 den ersten Stellantrieb 23 rotiert, dadurch den Stellabtrieb 24 verschiebt und somit eine Bremskraft auf die Gegenfläche 14 erzeugt.

Für den Fall, dass der erste Aktuator 31 in einer Situation versagt, in der die Bremsen gelöst werden sollen, kann der zweite Aktuator 32 betätigt werden, der über das zweite Getriebe 34 und den zweiten Stelltrieb 12 die Bremse von der Gegenfläche 14 löst. Falls auch der zweite Aktuator zeitgleich versagt, ist ein bremsenlösendes Verhalten durch den nicht selbst hemmenden Stelltrieb 11 noch immer gewährleistet.

Für den Fall, dass der zweite Aktuator 32 in einer Bremssituation, insbesondere als Feststellbremse, versagt, kann der erste Aktuator 31 betätigt werden, der über das erste Getriebe 33 und den ersten Stelltrieb 11 eine Bremskraft auf die Gegenfläche 14 erzeugt, wobei der zweite Stelltrieb 12 hierbei nicht verstellt wird und sich dieser aufgrund des nicht selbst-hemmenden Getriebes nahezu widerstandslos mitdrehen lässt.

Für den Fall, dass der zweite Aktuator 32 in einer Situation versagt, in der die Bremse gelöst werden soll, kann der erste Aktuator 31 betätigt werden, der über das erste Getriebe 33, den ersten Stelltrieb 11 die Bremse von der Gegenfläche 14 löst.

Bevorzugt arbeiten die Aktuatoren 31 und 32 im Betriebsbremsenmodus vereint, so dass bei gleichbleibender Gesamtleistung beide Motoren kleiner dimensioniert werden können. Hierzu ist es notwendig, dass beide Motoren synchron, das heisst mit gleicher Drehzahl und Laufrichtung drehen. Zu diesem Zwecke sind im hier dargestellten Ausführungsbeispiel beide Aktuatoren mit geeigneten Sensoreinrichtungen 31a, 32a ausgerüstet, so dass beide Motoren über eine gemeinsame Steuereinrichtung (nicht abgebildet) betrieben und synchronisiert werden können.

Weiterhin weist die in Fig. 4 dargestellte Stellvorrichtung 10 eine Verschleißkompensation zur Nachstellung eines Bremsteils 13 auf: Hierzu wird der zweite Stelltrieb 12 über den zweiten Stellmotor 32 zugestellt. Um dabei eine unerwünschte Verstellung des ersten Stelltriebs 11 zu verhindern, wirkt Stellmotor 31 vermittels des Getriebes 33 blockierend auf Stelltrieb 11. Dies ist insbesondere deshalb notwendig, da ohne besagte Blockierung von Stelltrieb 11 die Bewegung des zweiten Stellmotors 32 aufgrund der Selbsthemmung in Stelltrieb 12 bzw. der höheren Reibung in Stelltrieb 12 gegenüber Stelltrieb 11 zu einer Bewegung im ersten Stelltrieb 11 führen würde, und damit eine dauerhafte Nachstellung eines Bremsbelagverschleißes nicht möglich wäre, ohne dabei die gewünschte nicht-lineare Zustellcharakteristik des ersten Stelltriebes 11, und insbesondere den dabei vorgesehenen Nullpunkt, beizubehalten. Die bei der Verschließnachstellung sich einstellende Relativverschiebung der Stirnräder 35 und 36 kann hierbei z.B. durch eine ausreichende Zahnbreite kompensiert werden.

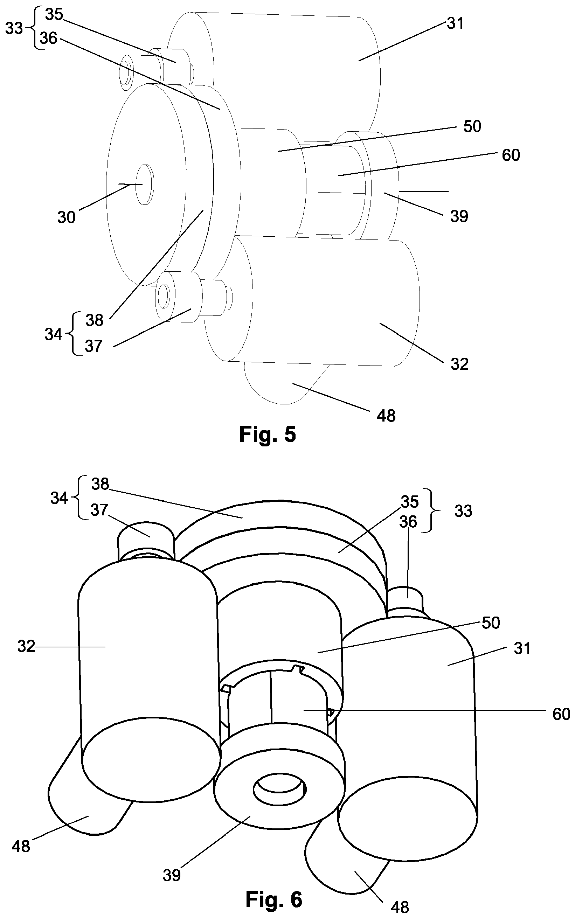

Bezug nehmend auf die Figuren 5-9 wird eine zweite erfindungsgemäße Ausführungsform erläutert, bei welcher die Aktuatoren 31 und 32 der wenigstens zwei Stelltriebe links- bzw. rechtsseitig achsparallel versetzt zur Drehachse 30 positioniert sind. Für Synergieeffekte sind beide Aktuatoren 31, 32 wie auch deren Getriebe 33, 34 jeweils baugleich ausgeführt. Die Stellvorrichtung ist dabei über zwei anskizzierte Anbindungspunkte 48 in die Umgebung, eingebunden.

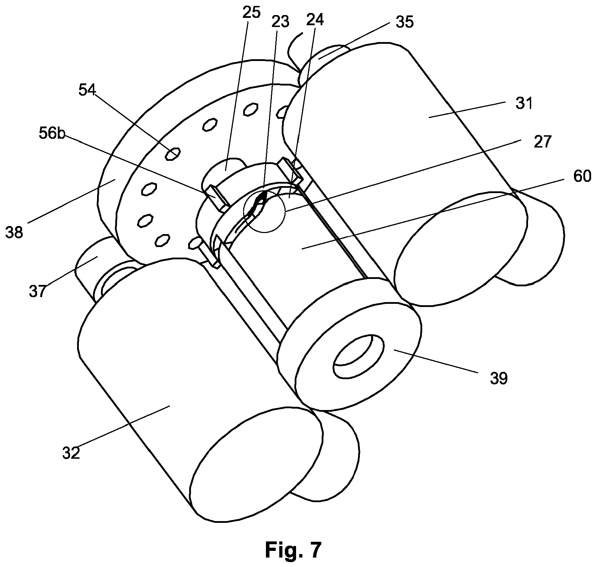

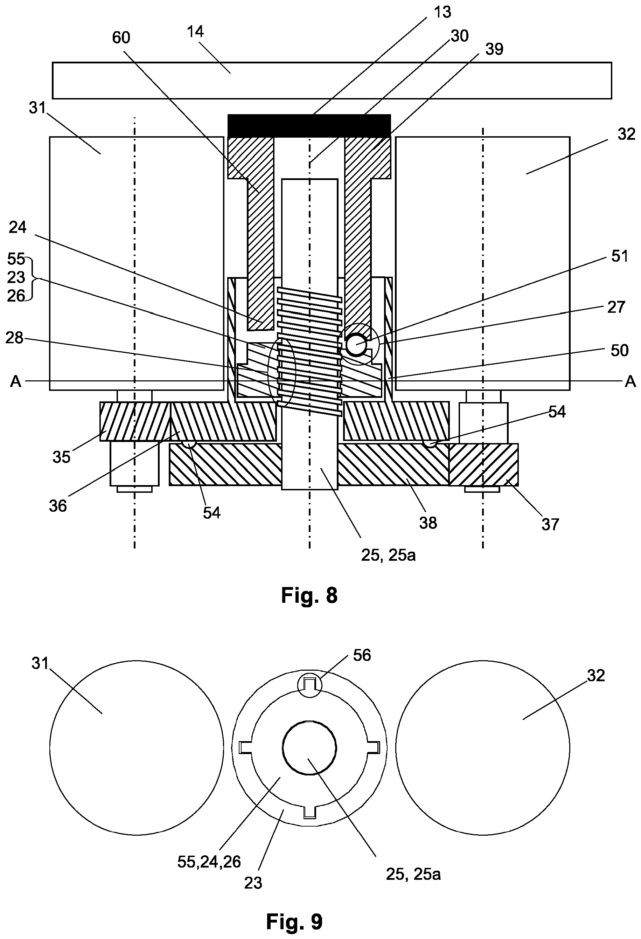

Figur 5 zeigt eine perspektivische Darstellung besagter Ausführungsform, jedoch ohne Bremsteil 13 und Gegenbremsteil 14. Figur 6 zeigt eine perspektivische Darstellung besagter Ausführungsform von einem anderen Blickwinkel, auch hier ohne Bremsteil 13 und Gegenbremsteil 14. Figur 7 zeigt eine perspektivische Darstellung besagter Ausführungsform, bei welcher ein Stirnrad 36 und die damit verbundene Ausgleichshülse 50 ausgeblendet sind. Figur 8 zeigt eine horizontal mittige Schnittdarstellung besagter Ausführungsform. Figur 9 zeigt einen Schnitt besagter Ausführungsform entlang der Linie A-A aus Figur 8.

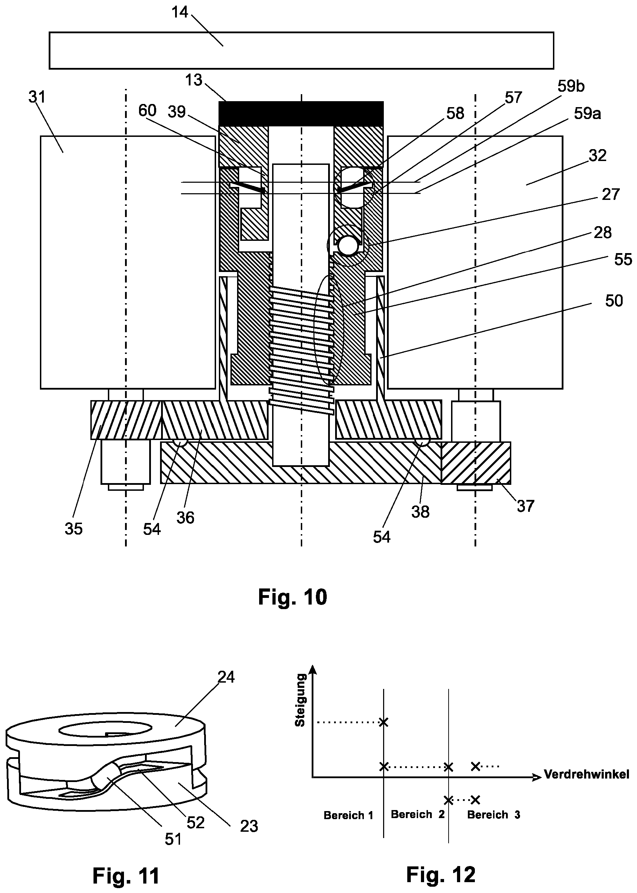

In dieser zweiten bevorzugten Ausführungsform ist der erste Stelltrieb 11 als Rampenlager ausgeführt mit Antriebsseite 23 und Abtriebsseite 24. Das Rampenlager besteht aus zwei Kurvenscheiben (hier auch mit 23, 24 bezeichnet, vgl. Fig 11) und einer dazwischen liegenden Anzahl von Kugeln 51. Die Abtriebsseite ist einstückig mit einer Stellhülse 60 verbunden. Die Stellhülse 60 ist wiederum mit dem Bremsteil 13 verbunden, so dass eine Rotation des Antriebs 23 je nach Drehrichtung eine Zustellung bzw. Wegstellung des Bremsteils 13 vom Gegenbremsteil 14 bewirkt.

Der zweite Stelltrieb 12 ist weiterhin als selbsthemmender Spindeltrieb mit Antrieb 25 und Abtrieb 26 ausgeführt. Abtrieb 26 und Antrieb 23 sind auch hier eintstückig ausgebildet, so dass eine Verstellung von Stelltrieb 12 nicht nur eine Verstellung des Abtriebs 26 sondern zugleich auch eine Verstellung des Antriebs 23 bedeutet. Bei einer Verstellung des Stelltriebes 12 erfolgt also automatisch auch eine Verstellung des Bremsteils 13.

Die erste Stellvorrichtung arbeitet angetrieben über den Aktuator 31 und wirkend über das erste Getriebe 33 auf eine Ausgleichshülse 50, welche drehfest mit dem Zahnrad 36, insbesondere einstückig, verbunden ist. Die Ausgleichshülse 50 überträgt das eingetragene Moment bzw. die Drehung formschlüssig auf den Antrieb 23 (im Folgenden auch Stellschlitten 55) des Stelltriebes 11, der als Rampenlager ausgeführt ist. Dies führt zu einer translativen Bewegung des Abtriebs 24, welches vermittels der Stellhülse 60 auf das Bremsteil 13 wirkt und dieses zum bzw. vom Gegenbremsteil 14 hin- bzw. wegbewegt.

Die formschlüssige Verbindung ist hierbei als Keilwellenverbindung 56 ausgeführt, welche eine axiale Relativverschiebung zwischen Stellschlitten 55 und Ausgleichshülse 50 zulässt.

Die zweite Stellvorrichtung arbeitet angetrieben über den Aktuator 32 und wirkend über das zweite Getriebe 34 auf eine Welle 25a, die zugleich den Antrieb 25 des zweiten Stelltriebs 12 darstellt. Der Antrieb wirkt über ein selbsthemmendes Gewinde 28 auf den Stellschlitten 55, der zugleich auch als Abtrieb 26 des zweiten Stelltriebs 12 gedeutet werden kann. Von hier aus erfolgt die Wirkweise auf einen Bremsbelag in analoger Weise zu obiger Erläuterung des ersten Stelltriebs.

Sowohl erster wie auch zweiter Stelltrieb 11 bzw. 12 können damit unabhängig voneinander durch die unmittelbare bzw. mittelbare Zustellung des ersten Stellabtriebs eine Bremsfunktion erzielen.

In einem bevorzugten Betriebsmodus arbeiten beide Aktuatoren 31, 32 synchron und gleichwirkend, so dass die Gesamtantriebsleistung vorteilhafterweise hälftig auf beide Aktuatoren 31, 32 verteilt werden kann. Für eine einfache Synchronisation, die auch mit etwaigen Messabweichungen von aktuatorseitigen Messeinrichtungen (nicht dargestellt) zurechtkommt, ist hierzu eine Rastkupplung mit Kupplungselementen 54 zwischen den baugleichen Stirnrädern 36, 38 des ersten bzw. zweiten Getriebes vorgesehen. Die Kupplungseinrichtung verhindert eine ungewollte Relativbewegung zwischen den Stirnrädern 36 und 38 und damit eine ungewollte Verschleißkompensationsnachstellung, deren Funktionsweise nachfolgend noch erläutert wird:
Eine Relativbewegung zwischen den Zahnrädern 36, 38 bewirkt eine Verdrehung zwischen Antrieb 25 bzw. Welle 25a und Ausgleichshülse 50, so dass der dazwischen befindliche Stellschlitten 55, welcher die beiden Stelltriebe als Antrieb 23 des ersten Stelltriebs 11 und Abtrieb 26 des zweiten Stelltriebs 12 koppelt, sich axial verschiebt.

Wird hierbei der Antrieb 23 des ersten Stelltriebs 11 stillgehalten, so dass nur der zweite Antrieb 25 dreht, so erfolgt keine Verstellung des ersten Stelltriebs 11. Der Nullpunkt bzw. die Nulllage des nicht-linearen Rampenlagers bleibt unverändert.

Über die durch die Rastkupplung 54 eindeutig vorgegebenen Stellwege kann dabei eine sehr genau definierte (positive oder negative) Zustellung des Bremsteils 13 auch bei vergleichsweise ungenauen Messeinrichtungen (nicht abgebildet) realisiert werden.

Eine alternativ wirkende Feststellbremsfunktion kann darüber hinaus durch eine negative Zustellung des zweiten Stelltriebs realisiert werden. In diesem Fall wird die Nachstelleinrichtung invers betätigt und ein "negativer Luftspalt" eingestellt, so dass eine gewünschte Bremsfunktion mit Selbsthemmung erzielt wird. Dies kann insbesondere dann vorteilhaft sein, wenn hohe Verspannungen der Bremsenteile, welche sich bei einer Feststell- oder Parkbremsfunktion analog den Erläuterungen zu Figur 12 einstellen, vermieden werden sollen. Vorteilhaft kann diese Feststellbremse auch beim Anfahren am Berg eingesetzt werden, bei dem auch bei Ausfall von Motormomenten ein Wegrollen des Fahrzeugs verhindert werden soll.

Bezug nehmend auf Figur 10 wird eine dritte bevorzugte, erfindungsgemäße Ausführungsform vorgestellt: Diese ist im wesentlichen gleichbauend mit der zweiten in Fig. 6-9 dargestellten Ausführungsform, weist darüberhinaus jedoch noch eine Rückstelleinrichtung 57, umfassend eine Tellerfeder 58, auf, so dass sich die Erläuterungen auf diese Rückstelleinrichtung beschränken:
Die dritte Ausführungsform erfüllt insbesondere die Funktion auch nach Kontaktverlust von Bremsbelag und Bremsscheibe, d.h. bei fehlenden rückstellend wirkenden Reaktionskräften von verspannten Bremsenteilen, z.B. einem Bremsensattel, eine zuverlässige Rückführung der Stellhülse 60 zu gewährleisteten.

Antrieb 23 und Abtrieb 24 des ersten Stelltriebs sind hierbei über eine Tellerfeder 58 verbunden. Diese wirkt rückstellend solange sie sich innerhalb der Ausgangsposition 59a und der Durchgangsposition 59b befindet. Dies ist bis zu einem Stellweg der Bremse gegeben, welcher dem Abstand 59a und 59b entspricht. Wird die Bremse weiter zugestellt, so passiert die Tellerfeder schließlich die Nulllage 59b, schlägt um und wirkt fortan mit gegenteiliger Kraftrichtung, so dass die Bremskraft verstärkt bzw. das Auseinanderdrücken von Stellschlitten 55 und Schubhülse 60 unterstützt wird.

Die Tellerfeder kann so eingestellt sein, dass die Bremseinrichtung bei ausbleibendem Krafteintrag der Aktuatoren entgegen der nun verstärkenden Kraftwirkung der Tellerfeder gleichwohl selbstlösend wirkt, wenn die aus den übrigen durch das Bremsen verspannten Bremsenteile, insbesondere eines Bremssattels, resultierenden Rückstellkräfte größer sind als die der Tellerfeder.

Denkmöglich sind anstelle einer Tellerfeder auch andere dem Fachmann geläufige und in bestimmten Bereichen umschlagend und kraftverstärkend wirkende Rückstellmittel, insbesondere an Kragarmen befestigte Schraubfedern, welche axiale und radiale Kraftvektoren beinhalten und damit verdrehwinkelabhängige Rück- bzw. Vorstellkräfte hervorrufen können.

Figur 11 stellt schließlich ein für eine erfindungsgemäße Stellvorrichtung beispielhaftes Rampenlager dar, bestehend aus zwei Kurvenscheiben 23, 24, welche über in Kugellaufbahn(en) 52 geführten Kugeln 51 miteinander verbunden sind. Eine erste Seite wirkt dabei als rotatorisch bewegter Antrieb 23, eine zweite Seite 24 als translatorisch wirkender Abtrieb. Der Abtrieb ist entsprechend verdrehfest, aber axial verschieblich gelagert. In den Figuren 6-10 sind An- und Abtriebsseite des Rampenlagers jeweils mit der Stellschlitten 55 bzw. der Schubhülse 60 einstückig verbunden. Die Kugellaufbahnen weisen eine nicht-lineare Steigung auf. Eine idealisierte Steigungskennlinie eines Rampenlagers für eine erfindungsgemäße Stellvorrichtung zeigt nachstehende Erläuterung zu Figur 12. Das Rampenlager kann 1, 2, 3, 4 oder mehrere Kugeln 51 aufweisen (aufgrund der Lagestabilität und vergleichsweise großen translatorischen Bewegungsstrecke des Lagers, vorzugsweise drei Kugeln), die in ihrer eigenen Kugellaufbahn 52 angeordnet sind, vorzugsweise konzentrisch und mit einem gleichen Winkelabstand zur nächsten Kugellaufbahn.

Figur 12 zeigt beispielhaft eine mögliche (idealisierte) Ausführung der Steigungskennlinie des nicht-linearen Stelltriebs. Diese Steigungkennlinie kann z.B. unmittelbar auf die in Figur 11 erwähnte Kugellaufbahn(en) 52 angewandt werden. Die Kennlinie ist dabei aus vier jeweils lineare Teilabschnitten zusammengesetzt, so dass sich insgesamt eine nicht-lineare Steigung ergibt. Bereiche 1 und 2 stellen dabei den Bereich dar, in welchem eine Bremse als Betriebsbremse genutzt wird. Bereich 3 dagegen stellt den Bereich dar, in welchem die Bremse als Park- oder Feststellbremse genutzt wird.

Im ersten Bereich ist die Steigung vergleichsweise steil; dies entspricht dem Wunsch einen zwischen Bremsbelag und Bremsscheibe befindlichen Luftspalt möglichst schnell zu überwinden. In einem zweiten Bereich ist die Steigung wesentlich moderater; dieser Bereich entspricht dem Wunsch hoher Bremskräfte vorzugsweise zwischen erster Kontaktierung von Bremsbelag und Bremsscheibe bis hin zu einer gewünschten Maximalbremskraft bzw. Maximalzustellung im Betriebsbremsenmodus. Der dritte Bereich weist eine negativen und einen positiven Steigungsabschnitt auf, und definiert somit ein lokales Energieminimum bzw. eine Vorzugsposition für ein sich auf dieser Steigungslinie bewegenden Elements, etwa einer Kugel eines Rampenlagers. In diesem Bereich verhält sich das Rampenlager daher selbsthemmend. Zum Aufheben der Selbsthemmung ist eine mittel- oder unmittelbar erzeugte Rückstellung bzw. -drehung der antreibenden Kurvenscheibe notwendig.

Wie bereits erwähnt, kann diese Rückstellung im in den Figuren 6-10 dargestellten Ausführungsbeispiel aufgrund der Synchronisationseinrichtung durch beide der Stellmotoren 31 bzw. 32 erfolgen.

Es sei darauf hingewiesen, dass die Darstellungen dem Fachmann geläufige und nicht erfindungswesentliche, aber notwendige Komponenten bzw. Modifizierungen gezeigter Komponenten aus Gründen der Übersichtlichkeit nicht abgebildet sind. Hierunter fallen insbesondere nicht dargestellte Gehäuseteile und nicht oder nur unzureichend dargestellte Führungseinrichtungen, beispielsweise die Lagerung der Welle 24a oder ein verdrehsichere axiale Führung der Schubhülse 60 oder des Abtriebes 24. Diese können aber vom Fachmann entsprechend der hier dargelegten Funktionsweise der erfindungsgemäßen Ausführungsbeispiele problemlos ergänzt werden.

### Bezugszeichenliste

- 1: Fahrzeug
- 2: Bremsvor-/einrichtung
- 3: Fahrzeugrad/-reifen
- 4: Steuerung/Steuereinheit
- 5: Bremspedal
- 6: Signalleitung
- 7: Lenkrad
- 8: Zahnstangenlenkung
- 10: Stellvorrichtung
- 11: erster Stelltrieb
- 12: zweiter Stelltrieb
- 13: Bremsteil
- 14: Gegenbremsteil
- 15: Gehäuse
- 16: Bremsspalt bzw. Abstand zwischen Bremsscheibe und Bremsbelag
- 21: bewegbares Gestänge bzw. Verbindungselement
- 22: bewegbares Gestänge bzw. Verbindungselement
- 23: erste Antriebsseite (des ersten Stellantriebs)
- 24: erste Abtriebsseite (des ersten Stelltriebs)
- 25: zweite Antriebsseite (des zweiten Stellantriebs)
- 25a: Welle
- 26: zweite Abtriebsseite (des zweiten Stelltriebs)
- 27: nicht-selbsthemmende Ausbildung des ersten Stelltriebs
- 28: selbsthemmende Ausbildung des zweiten Stelltriebs
- 30: Drehachse
- 31: erster Aktuator
- 31a: Sensor von 31
- 32: zweiter Aktuator
- 32a: Sensor von 32
- 33: erstes Getriebe / Kraftübertragungsvorrichtung des ersten Aktuators
- 34: zweites Getriebe / Kraftübertragungsvorrichtung des zweiten Aktuators
- 35: erstes Zahnrad des ersten Getriebes
- 36: zweites Zahnrad des ersten Getriebes
- 37: erstes Zahnrad des zweiten Getriebes
- 38: zweites Zahnrad des zweiten Getriebes
- 39: Auflageplatte mit Aufnahmemöglichkeit für Bremsbelag
- 41: Außengewinde des Antriebs des ersten Stelltriebs
- 42: Innengewinde des Abtriebs des ersten Stelltriebs
- 43: Überschneidungsbereich
- 45: Außengewinde des Antriebs des zweiten Stelltriebs
- 46: Innengewinde des Abtriebs des zweiten Stelltriebs
- 47: Überschneidungsbereich
- 48: Anbindungspunkte der Bremseinrichtung
- 50: Ausgleichshülse
- 51: Kugel
- 52: Kugellaufbahn
- 53: Rastteil des ersten Stelltriebes
- 54: Kupplungselement
- 55: Stellschlitten
- 56: Übertragungseinrichtung
- 57: Rückstelleinrichtung
- 58: Tellerfeder
- 59a: Ausgangsposition von 58
- 59b: Null- bzw. Durchgangsposition von 58
- 60: Stellhülse

## Patentansprüche

1. Mechanische Bremsvorrichtung umfassend eine Stellvorrichtung (10) und ein Bremsteil (13), das mit einem Gegenbremsteil (14) in Eingriff bringbar ist,
**dadurch gekennzeichnet, dass** die Stellvorrichtung (10) einen ersten Stelltrieb (11), der eine erste Antriebsseite (23) und eine erste Abtriebsseite (24) aufweist,
wobei über die erste Abtriebsseite (24) das Bremsteil (13) bewegbar ist,
wobei die erste Abtriebsseite (24) gegenüber der ersten Antriebsseite (23) zumindest in einem Teilbereich der möglichen Bewegung nicht selbsthemmend ausgebildet ist,
sowie einen zweiten Stelltrieb (12), der eine zweite Antriebsseite (25) und eine zweite Abtriebsseite (26) aufweist,
wobei über die zweite Abtriebsseite (26) das Bremsteil (13) bewegbar ist,
wobei die zweite Abtriebsseite (26) gegenüber der zweiten Antriebsseite (25) zumindest in einem Teilbereich der möglichen Bewegung jedoch selbsthemmend ausgebildet ist,
wobei eine Bewegung des Bremsteils (13) über die erste Antriebsseite (23) des ersten Stelltriebs (11) als auch über die zweite Antriebsseite (25) des zweiten Stelltriebs (12) bewirkbar ist ohne dass hierbei eine Relativbewegung zwischen zweiter Antriebsseite (25) und zweiter Abtriebsseite (26) des zweiten Stelltriebs (12) erfolgt.

2. Mechanische Bremsvorrichtung nach Anspruch 1 ,
**dadurch gekennzeichnet, dass**
der Reibungswiderstand zwischen erster Antriebsseite (23) und erster Abtriebsseite (24) kleiner ist als zwischen zweiter Antriebsseite (25) und zweiter Abtriebsseite (26).

3. Mechanische Bremsvorrichtung nach Anspruch 1 bis 2,
**dadurch gekennzeichnet, dass**
der wenigstens eine erste Stelltrieb (11) mit einer nicht-linearen Übersetzung ausgeführt ist.

4. Mechanische Bremsvorrichtung nach Anspruch 1 bis 3,
**dadurch gekennzeichnet, dass**
der erste Stelltrieb (11) und der zweite Stelltrieb (12) koaxial zueinander angeordnet sind.

5. Mechanische Bremsvorrichtung nach einem der Ansprüche 1 bis 4,
**gekennzeichnet durch**
wenigstens einem ersten elektrischen Stellmotor (31) mit einem ersten nicht-selbsthemmenden Getriebe (33), zum Antreiben des wenigstens einem ersten Stelltriebs (11), und
wenigstens einem zweiten elektrischen Stellmotor (32) mit einem zweiten nicht-selbsthemmenden Getriebe (34), zum Antreiben des wenigstens einem zweiten Stelltriebs (12).

6. Mechanische Bremsvorrichtung nach Anspruch 5,
**dadurch gekennzeichnet, dass**
der erste Stelltrieb (11) einen Teil des ersten Getriebes (33) und/oder der zweite Stelltrieb (12) einen Teil des zweiten Getriebes (34), insbesondere in Form jeweils eines Stirnradgetriebes, bildet/bilden.

7. Mechanische Bremsvorrichtung nach einem der Ansprüche 1 bis 6,
**dadurch gekennzeichnet, dass**
die erste Antriebsseite (23) und die zweite Abtriebsseite (26) als ein Bauteil gefertigt / einstückig ausgebildet sind.

8. Mechanische Bremsvorrichtung nach Anspruch 1 bis 7,
**dadurch gekennzeichnet, dass**
erste Antriebsseite (23) und zweite Antriebsseite (25) mittel- oder unmittelbar synchronisierbar sind.

9. Mechanische Bremsvorrichtung nach Anspruch 1 bis 8,
**dadurch gekennzeichnet, dass**
der zweite Stelltrieb nur bei kraft- bzw. momenteninverser Beaufschlagung von erstem Stellantrieb und zweitem Stellantrieb verstellt werden kann.

10. Mechanische Bremsvorrichtung nach einem der Ansprüche 1 bis 9,
**dadurch gekennzeichnet, dass**
der erste Stelltrieb (11)
- mittelbar bzw. indirekt, insbesondere über den wenigstens einen zweiten Stelltrieb (12), oder
- unmittelbar bzw. direkt
mit einem Bremsteil (13) verbindbar ist.

11. Mechanische Bremsvorrichtung nach einem der Ansprüche 1 bis 10,
**dadurch gekennzeichnet, dass**
ein erster und/oder zweiter Stelltrieb (11; 12) als Spindeltrieb, als Rampenlager, als Kurventrommel, als elektrohydraulischer und/oder als elektropneumatischer Stelltrieb ausgebildet ist/sind.

12. Mechanische Bremsvorrichtung nach einem der Ansprüche 1 bis 11,
**dadurch gekennzeichnet, dass**
der erste Stelltrieb (11) und der zweite Stelltrieb (12) jeweils als Gewindespindel mit Gewindestange und Gewindeläufer ausgebildet sind,
wobei die Gewindestange des wenigstens einen ersten Stelltriebs (11) und der Gewindeläufer des wenigstens einen zweiten Stelltrieb (12) verdrehsicher miteinander verbunden sind.

13. Mechanische Bremsvorrichtung nach einem der Ansprüche 1 bis 11,
**dadurch gekennzeichnet, dass**
der erste Stelltrieb (11) als Rampenlager und der zweite Stelltrieb (12) als Gewindespindel ausgeführt ist.

14. Mechanische Bremsvorrichtung nach einem der Ansprüche 1 bis 11 und 13,
**dadurch gekennzeichnet, dass**
die Antriebsseite (23) des ersten Stelltriebs (11) als Keilwellenverbindung ausgebildet ist.

15. Mechanische Bremsvorrichtung nach einem der Ansprüche 1 bis 14
**dadurch gekennzeichnet, dass**
zwischen erstem Stelltrieb (11) und Bremsteil (13) ein eine Rückstellung des Bremsbelages bewirkendes Federelement (58), insbesondere eine Tellerfeder, vorgesehen ist.

16. Mechanische Bremsvorrichtung nach einem der vorhergehenden Ansprüche
**dadurch gekennzeichnet, dass**
der erste Stelltrieb (11) wenigstens drei Bereiche mit unterschiedlichen Steigungen aufweist, von denen wenigstens ein Bereich eine negative Steigung aufweist.

## Claims

1. Mechanical brake device comprising an actuating device (10) and a brake part (13) which can be brought into engagement with a mating brake part (14), **characterized in that** the actuating device (10) has a first actuating drive (11) which has a first drive side (23) and a first output side (24), wherein the brake part (13) is movable via the first output side (24), wherein the first output side (24) is not self-locking in relation to the first drive side (23) at least in one partial region of the possible movement, and a second actuating drive (12) which has a second drive side (25) and a second output side (26), wherein the brake part (13) is movable via the second output side (26), wherein the second output side (26) is, however, self-locking in relation to the second drive side (25) at least in one partial region of the possible movement, wherein a movement of the brake part (13) can be brought about via the first drive side (23) of the first actuating drive (11) and also via the second drive side (25) of the second actuating drive (12) without a relative movement between the second drive side (25) and the second output side (26) of the second actuating drive (12) taking place here.

2. Mechanical brake device according to Claim 1, **characterized in that** the frictional resistance between the first drive side (23) and the first output side (24) is smaller than between the second drive side (25) and the second output side (26).

3. Mechanical brake device according to Claims 1 to 2, **characterized in that** the at least one first actuating drive (11) is designed with a non-linear transmission ratio.

4. Mechanical brake device according to Claims 1 to 3, **characterized in that** the first actuating drive (11) and the second actuating drive (12) are arranged coaxially with respect to each other.

5. Mechanical brake device according to one of Claims 1 to 4, **characterized by** at least one first electric actuating motor (31) with a first non-self-locking transmission (33), for driving the at least one first actuating drive (11), and at least one second electric actuating motor (32) with a second non-self-locking transmission (34), for driving the at least one second actuating drive (12).

6. Mechanical brake device according to Claim 5, **characterized in that** the first actuating drive (11) forms part of the first transmission (33) and/or the second actuating drive (12) forms part of the second transmission (34), in particular in the form in each case of a spur gearing.

7. Mechanical brake device according to one of Claims 1 to 6, **characterized in that** the first drive side (23) and the second output side (26) are manufactured as one component/formed integrally.

8. Mechanical brake device according to Claims 1 to 7, **characterized in that** the first drive side (23) and the second drive side (25) can be synchronized indirectly or directly.

9. Mechanical brake device according to Claims 1 to 8, **characterized in that** the second actuating drive can be adjusted only in the event of a force- or torque-inverse application of a first actuator and second actuator.

10. Mechanical brake device according to one of Claims 1 to 9, **characterized in that** the first actuating drive (11) is connectable to a brake part (13)
- indirectly, in particular via the at least one second actuating drive (12), or
- directly.

11. Mechanical brake device according to one of Claims 1 to 10, **characterized in that** a first and/or second actuating drive (11; 12) are/is designed as a spindle drive, as a ramp bearing, as a barrel cam, as an electrohydraulic and/or as an electropneumatic actuating drive.

12. Mechanical brake device according to one of Claims 1 to 11, **characterized in that** the first actuating drive (11) and the second actuating drive (12) are both designed as a threaded spindle with a threaded rod and threaded rotor, wherein the threaded rod of the at least one first actuating drive (11) and the threaded rotor of the at least one second actuating drive (12) are connected to each other in a manner secure against torsion.

13. Mechanical brake device according to one of Claims 1 to 11, **characterized in that** the first actuating drive (11) is designed as a ramp bearing and the second actuating drive (12) as a threaded spindle.

14. Mechanical brake device according to one of Claims 1 to 11 and 13, **characterized in that** the drive side (23) of the first actuating drive (11) is in the form of a splined shaft connection.

15. Mechanical brake device according to one of Claims 1 to 14, **characterized in that** a spring element (58) bringing about a resetting of the brake pad, in particular a disc spring, is provided between the first actuating drive (11) and the brake part (13).

16. Mechanical brake device according to one of the preceding claims, **characterized in that** the first actuating drive (11) has at least three regions with different pitches, of which at least one region has a negative pitch.

## Revendications

1. Dispositif de freinage mécanique comportant un dispositif de réglage (10) et une partie de frein (13), qui peut être amenée en prise avec une partie de frein conjuguée (14),
**caractérisé en ce que**
le dispositif de réglage (10) comprend un premier mécanisme de réglage (11), qui comprend un premier côté d'entraînement (23) et un premier côté de sortie (24), la partie de frein (13) étant déplaçable par le biais du premier côté de sortie (24),
le premier côté de sortie (24) étant réalisé de manière non autobloquante par rapport au premier côté d'entraînement (23) au moins dans une région partielle du déplacement possible,
ainsi qu'un deuxième mécanisme de réglage (12), qui comprend un deuxième côté d'entraînement (25) et un deuxième côté de sortie (26),
la partie de frein (13) étant déplaçable par le biais du deuxième côté de sortie (26),
le deuxième côté de sortie (26) étant réalisé cependant de manière autobloquante par rapport au deuxième côté d'entraînement (25) au moins dans une région partielle du déplacement possible,
un déplacement de la partie de frein (13) pouvant être produit par le biais du premier côté d'entraînement (23) du premier mécanisme de réglage (11) et également par le biais du deuxième côté d'entraînement (25) du deuxième mécanisme de réglage (12) sans qu'un déplacement relatif entre le deuxième côté d'entraînement (25) et le deuxième côté de sortie (26) du deuxième mécanisme de réglage (12) n'ait lieu.

2. Dispositif de freinage mécanique selon la revendication 1,
**caractérisé en ce que**
la résistance due au frottement entre le premier côté d'entraînement (23) et le premier côté de sortie (24) est inférieure à celle entre le deuxième côté d'entraînement (25) et le deuxième côté de sortie (26).

3. Dispositif de freinage mécanique selon les revendication 1 et 2,
**caractérisé en ce que**
l'au moins un premier mécanisme de réglage (11) est réalisé de manière à présenter un rapport de transmission non linéaire.

4. Dispositif de freinage mécanique selon les revendications 1 à 3,
**caractérisé en ce que**
le premier mécanisme de réglage (11) et le deuxième mécanisme de réglage (12) sont disposés de manière coaxiale l'un par rapport à l'autre.

5. Dispositif de freinage mécanique selon l'une des revendications 1 à 4,
**caractérisé par**
au moins un premier moteur de réglage électrique (31) doté d'une première transmission (33) non autobloquante, pour l'entraînement de l'au moins un premier mécanisme de réglage (11), et
au moins un deuxième moteur de réglage électrique (32) doté d'une deuxième transmission (34) non autobloquante, pour l'entraînement de l'au moins un deuxième mécanisme de réglage (12).

6. Dispositif de freinage mécanique selon la revendication 5,
**caractérisé en ce que**
le premier mécanisme de réglage (11) forme une partie de la première transmission (33) et/ou le deuxième mécanisme de réglage (12) forme une partie de la deuxième transmission (34), en particulier respectivement sous la forme d'une transmission à pignons droits.

7. Dispositif de freinage mécanique selon l'une des revendications 1 à 6,
**caractérisé en ce que**
le premier côté d'entraînement (23) et le deuxième côté de sortie (26) sont fabriqués comme un composant / sont réalisés d'une seule pièce.

8. Dispositif de freinage mécanique selon les revendications 1 à 7,
**caractérisé en ce que**
le premier côté d'entraînement (23) et le deuxième côté d'entraînement (25) peuvent être synchronisés directement ou indirectement.

9. Dispositif de freinage mécanique selon les revendications 1 à 8,
**caractérisé en ce que**
le deuxième mécanisme de réglage ne peut être déplacé qu'en cas de sollicitation, par une force ou un couple en sens inverse, du premier mécanisme de réglage et du deuxième mécanisme de réglage.

10. Dispositif de freinage mécanique selon l'une des revendications 1 à 9,
**caractérisé en ce que**
le premier mécanisme de réglage (11) peut être relié à une partie de frein (13)
- indirectement, en particulier par le biais de l'au moins un deuxième mécanisme de réglage (12), ou
- directement.

11. Dispositif de freinage mécanique selon l'une des revendications 1 à 10,
**caractérisé en ce**
**qu'**un premier et/ou un deuxième mécanisme de réglage (11 ; 12) est/sont réalisé(s) sous forme de mécanisme à broche, sous forme de palier à rampes, sous forme de came en forme de tambour, sous forme de mécanisme de réglage électrohydraulique et/ou sous forme de mécanisme de réglage électropneumatique.

12. Dispositif de freinage mécanique selon l'une des revendications 1 à 11,
**caractérisé en ce que**
le premier mécanisme de réglage (11) et le deuxième mécanisme de réglage (12) sont réalisés respectivement sous forme de broche filetée dotée d'une tige filetée et d'un coulisseau fileté, la tige filetée de l'au moins un premier mécanisme de réglage (11) et le coulisseau fileté de l'au moins un deuxième mécanisme de réglage (12) étant reliés l'un à l'autre de manière bloquée en rotation.

13. Dispositif de freinage mécanique selon l'une des revendications 1 à 11,
**caractérisé en ce que**
le premier mécanisme de réglage (11) est réalisé sous forme de palier à rampes et le deuxième mécanisme de réglage (12) est réalisé sous forme de broche filetée.

14. Dispositif de freinage mécanique selon l'une des revendications 1 à 11 et 13,
**caractérisé en ce que**
le côté d'entraînement (23) du premier mécanisme de réglage (11) est réalisé sous forme de liaison à arbre cannelé.

15. Dispositif de freinage mécanique selon l'une des revendications 1 à 14,
**caractérisé en ce**
**qu'**un élément ressort (58), en particulier une rondelle-ressort, provoquant un rappel de la garniture de frein est prévu entre le premier mécanisme de réglage (11) et la partie de frein (13).

16. Dispositif de freinage mécanique selon l'une des revendications précédentes,
**caractérisé en ce que**
le premier mécanisme de réglage (11) comprend au moins trois régions de pentes différentes, parmi lesquelles au moins une région présente une pente négative.
